# EUROPÄISCHE PATENTSCHRIFT

(11) **EP 1 144 848 B1**
(45) Veröffentlichungstag und Bekanntmachung des Hinweises auf die Patenterteilung: **26.10.2005**
(21) Anmeldenummer: 00987034.6
(22) Anmeldetag: 27.10.2000
(51) Int. Cl.: F02M 51/06

(54) **BRENNSTOFFEINSPRITZVENTIL**
FUEL INJECTION VALVE
SOUPAPE D'INJECTION DE CARBURANT

(30) Priorität: 28.10.1999 DE 19952057
(43) Veröffentlichungstag der Anmeldung: 17.10.2001
(73) Patentinhaber: ROBERT BOSCH GMBH, 70442 Stuttgart (DE)
(72) Erfinder: RUEHLE, Wolfgang, 71254 Ditzingen (DE); STIER, Hubert, 71679 Asperg (DE); BOEE, Matthias, 71640 Ludwigsburg (DE); HOHL, Guenther, 70569 Stuttgart (DE); KEIM, Norbert, 74369 Loechgau (DE)
(86) Internationale Anmeldenummer: PCT/DE2000/003799
(87) Internationale Veröffentlichungsnummer: WO 2001/034968

(56) Entgegenhaltungen:
- DE-A- 1 751 543
- DE-A- 19 500 706
- DE-A- 19 534 445
- US-A- 4 022 166
- US-A- 5 821 671

## Beschreibung

### Stand der Technik

Die Erfindung geht aus von einem Brennstoffeinspritzventil nach der Gattung des Hauptanspruches.

Aus z. B. der DE 195 34 445 C 2 ist bereits ein Brennstoffeinspritzventil nach der Gattung des Hauptanspruchs bekannt. Bei dem aus dieser Druckschrift hervorgehenden Brennstoffeinspritzventil ist ein piezoelektrischer Aktor zur Betätigung einer mit einem Ventilschließkörper verbundenen Ventilnadel vorgesehen. Der Ventilschließkörper wirkt mit einer Ventilsitzfläche zu einem Dichtsitz zusammen.

Nachteilig sind bei dieser bekannten Bauform die für die relativ großen Hubkräfte relativ geringen Hubwege des aus mehreren, gestapelt angeordneten piezoelektrischen Schichten aufgebauten piezoelektrischen Aktors.

Ferner ist das in der genannten Druckschrift beschriebene Brennstoffeinspritzventil nur entweder als nach innen oder nach außen öffnendes Ventil realisierbar. Doch machen unterschiedliche Anforderungen an die Ventile auch eine nach außen bzw. nach innen gerichtete Öffnung bei ansonsten gleicher Konstruktion erforderlich. Zu diesem Zweck muß die Wirkrichtung des Aktors umgekehrt werden. Bei der DE 195 00 706 A 1 wird dies durch eine hydraulisch wirkende Richtungsumkehr erreicht. Hierbei sind insbesondere die konstruktiv schwierig zu realisierende hydraulische Einrichtung zur Richtungsumkehr und der erhöhte Platzbedarf einer solchen Hydraulik von Nachteil. Auch Leckverluste der Hydraulikflüssigkeit und nachfolgende Beeinträchtigungen in der Funktionsweise und Lebensdauer der hydraulischen Einrichtung und damit des ganzen Brennstoffeinspritzventils sind nachteilig.

Aus der DE 1 751 543 A ist bereits ein Brennstotieinspritzventil, insbesondere ein Einspritzventil für Brennstoffeinspritzanlagen von Brennkraftmaschinen bekannt, das durch einen piezoelektrischen Aktor betätigt wird. Bei Bestromung des Aktors ist mittels einer Ventilnadel ein an ihr ausgebildeter Ventilschließkörper betätigbar, der mit einer Ventilsitzfläche zu einem Dichtsitz zum Öffnen und Schließen des Brennstoffeinspritzventils zusammenwirkt. Die Ventilnadel und der Aktor sind derart innerhalb des Brennstoffeinspritzventils angeordnet, dass ihre Betätigungs- bzw. Bewegungsrichtungen mit einem Versatz parallel zueinander verlaufen. Die Ventilnadel ist dabei über einen Kipphebel, der drehbar im Ventilgehäuse gelagert ist, mit dem Aktor verbunden. Der Aktor greift also an einem ersten Hebelarm des schwenkbaren Kipphebels an, während ein zweiter Hebelarm des schwenkbaren Kipphebels mit der Ventilnadel in Wirkverbindung steht. Durch eine entsprechende Abstimmung der Länge der beiden Hebelarme des Kipphebels kann der Öffnungshub der Ventilnadel und/oder das Kraftverhältnis zwischen einer auf die Ventilnadel lastenden Feder und dem piezoelektrischen Aktor berücksichtigt werden. Die parallele Anordnung von piezoelektrischem Aktor und Ventilnadel erfordert einen erheblichen Bauraum im Brertnstoffeinspritzventil und verursacht so eine große radiale Ausdehnung des Brennstoffeinspritzventils und somit einen großen Platzbedarf im Zylinderkopf.

### Vorteile der Erfindung

Das erfindungsgemäße Brennstoffeinspritzventil mit den Merkmalen des Hauptanspruches hat demgegenüber den Vorteil, daß die Richtungsumkehr der Wirkrichtung durch rein mechanisch wirkende Kippelemente erreicht wird. Dadurch zeichnet sich die erfindungsgemäße Konstruktion als wenig störungsanfällig, günstig in der Herstellung und durch geringen Platzbedarf aus.

Die durch die Kippelemente erzielte Richtungsumkehr ist vielseitig einsetzbar und nicht auf piezoelektrische Aktoren beschränkt.

Durch die in den Unteransprüchen aufgeführten Maßnahmen sind vorteilhafte Weiterbildungen und Verbesserungen des im Hauptanspruch gegebenen Brennstoffeinspritzventils möglich.

Durch eine geringfügige Umgestaltung der Kippelemente kann zudem der relativ geringe Hub, der durch den piezoelektrischen Aktor erzeugt wird, mittels Verlängerung des Hebelarms übersetzt und der auf die Ventilnadel ausgeübte Hub vergrößert werden.

Das erfindungsgemäße Brennstoffeinspritzventil zeichnet sich zudem durch hohe Präzision in den Öffnungs- und Schließzeiten und damit auch in der zugemessenen Brennstoffmenge aus, da die Richtungsumkehr und die Hubübersetzung verzögerungsfrei arbeiten.

### Zeichnung

Ausführungsbeispiele der Erfindung sind in der Zeichnung vereinfacht dargestellt und in der nachfolgenden Beschreibung näher erläutert. Es zeigen:
- Fig. 1: einen axialen, schematischen Schnitt durch ein erstes Ausführungsbeispiel eines erfindungsgemäßen Brennstoffeinspritzventils und
- Fig. 2: einen axialen, schematischen Schnitt durch ein zweites Ausführungsbeispiel eines erfindungsgemäßen Brennstoffeinspritzventils.

### Beschreibung der Ausführungsbeispiele

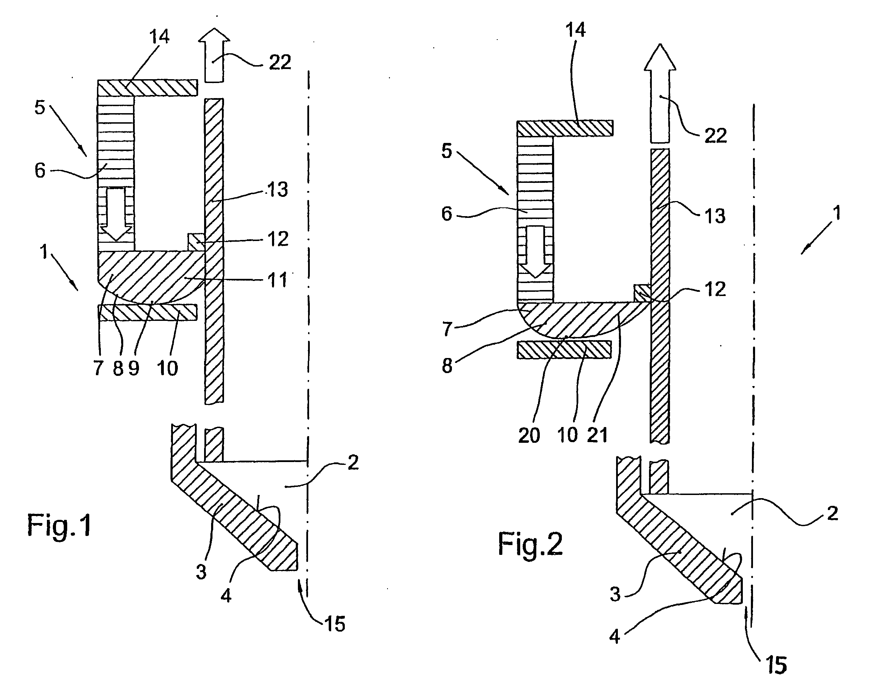

Fig. 1 zeigt in einer axialen Schnittdarstellung ein erstes Ausführungsbeispiel des erfindungsgemäßen Brennstoffeinspritzventils 1. Das Brennstoffeinspritzventil eignet sich insbesondere zum direkten Einspritzen von Brennstoff, insbesondere von Benzin, in den Brennraum einer vorzugsweise gemischverdichtenden, fremdgezündeten Brennkraftmaschine. Bei dem in Fig. 1 nur sehr schematisch dargestellten Brennstoffeinspritzventil handelt es sich um ein nach innen öffnendes Brennstoffeinspritzventil 1.

Das Brennstoffeinspritzventil 1 weist einen Ventilschließkörper 2 auf, welcher mit einer an einem Ventilsitzkörper 3 ausgebildeten Ventilsitzfläche 4 zu einem Dichtsitz zusammenwirkt.

Ein Aktor 5 ist z. B. aus scheibenförmigen Elementen 6 zusammengesetzt und umgibt eine rohrförmige Ventilnadel 13 ringförmig. Die scheibenförmigen Elemente 6 des Aktors 5 bestehen aus einem piezoelektrischen oder magnetostriktiven Material und können miteinander verklebt sein. Endseitig ist der Aktor 5 an einem ersten Hebelarm 7 von schwenkbaren Kippelementen 8 fixiert.

Die schwenkbaren Kippelemente 8 sind ringförmig um die Ventilnadel 13 angeordnet, wobei der Ring in mehrere Segmente aufgeteilt ist.

Die schwenkbaren Kippelemente 8 besitzen auf ihrer dem Aktor 5 abgewandten Seite jeweils eine gekrümmte Auflagefläche 9, welche auf einem ersten Widerlager 10 aufliegt und in Fig. 1 symmetrisch gestaltet ist.

Die schwenkbaren Kippelemente 8 greifen mit einem zweiten Hebelarm 11 an einem Mitnehmer 12 an, welcher an der Ventilnadel 13 angebracht ist. Der Aktor 5 ist endseitig auf der den Kippelementen gegenüberliegenden Seite mit einem zweiten Widerlager 14 z. B. durch Verklebung verbunden.

Sobald an den Aktor 5 eine elektrische Spannung angelegt wird, dehnen sich die scheibenförmigen Elemente 6 aus und verursachen durch den so entstehenden Hub eine Kraft auf die ersten Hebelarme 7 der schwenkbaren Kippelemente 8. Durch die gekrümmte Form der Auflageflächen 9 bewegen sich die zweiten Hebelarme 11 der schwenkbaren Kippelemente 8 in die entgegengesetzte Richtung und führen dadurch auch über den Mitnehmer 12 die Ventilnadel 13 in dieselbe Richtung, wodurch der mit der Ventilnadel 13 verbundene Ventilschließkörper 2 von der Ventilsitzfläche 4 abhebt. Dadurch wird das nach innen öffnende Brennstoffeinspritzventil 1 geöffnet und Brennstoff wird durch wenigstens eine Abspritzöffnung 15 gespritzt. Die Bewegungsrichtung der Ventilnadel 13 ist durch den Pfeil 22 verdeutlicht.

Fig. 2 zeigt einen axialen Schnitt durch ein zweites Ausführungsbeispiel eines erfindungsgemäßen Brennstoffeinspritzventils 1. Bereits beschriebene Elemente sind mit übereinstimmenden Bezugszeichen versehen, um die Zuordnung zu erleichtern. Auf eine wiederholende Beschreibung wird insoweit verzichtet.

Während es sich bei dem in Fig. 1 dargestellten Brennstoffeinspritzventil 1 um eine Konstruktion mit schwenkbaren Kippelementen 8 mit symmetrisch gekrümmter Auflagefläche 9 handelt, ist bei dem Ausführungsbeispiel der Fig. 2 die Auflagefläche 20 asymmetrisch gestaltet.

Dies bewirkt bei einem im Vergleich zu Fig. 1 gleich gestalteten Aktor 5 mit gleicher Anzahl an scheibenförmigen Elementen 6 und gleicher elektrischer Spannung einen größeren Hub der Ventilnadel 13 über den Mitnehmer 12; somit liegt hier eine Hubübersetzung vor.

Die Erfindung ist nicht auf die genannten Ausführungsbeispiele beschränkt und ist insbesondere auch auf andere Aktoren, beispielsweise auf elektromagnetisch arbeitende Aktoren, sowie andere Ventilkonstruktionen anwendbar.

## Patentansprüche

1. Brennstoffeinspritzventil (1), insbesondere Einspritzventil für Brennstoffeinspritzanlagen von Brennkraftmaschinen, mit einem von einem Aktor (5) mittels einer Ventilnadel (13) betätigbaren Ventilschließkörper (2), der mit einer Ventilsitzfläche (4) zu einem Dichtsitz zusammenwirkt, und mit zumindest einem zwischen dem Aktor (5) und der Ventilnadel (13) angeordneten schwenkbaren Kippelement (8), wobei der Aktor (5) an einem ersten Hebelarm (7) des schwenkbaren Kippelements (8) angreift und ein zweiter Hebelarm (11) des schwenkbaren Kippelements (8) mit der Ventilnadel (13) in Wirkverbindung steht,
**dadurch gekennzeichnet,**
**dass** der Aktor (5) ringförmig ausgebildet ist und die Ventilnadel (13) dabei umgibt.

2. Brennstoffeinspritzventil nach Anspruch 1,
**dadurch gekennzeichnet,**
**daß** sich jedes schwenkbare Kippelement (8) an einem ersten Widerlager (10) abstützt.

3. Brennstoffeinspritzventil nach Anspruch 2,
**dadurch gekennzeichnet,**
**daß** jedes schwenkbare Kippelement (8) eine gekrümmte Auflagefläche (9) hat, an der es an dem ersten Widerlager (10) anliegt.

4. Brennstoffeinspritzventil nach einem der Ansprüche 1 bis 3,
**dadurch gekennzeichnet,**
**daß** die Auflagefläche (9) des schwenkbaren Kippelements (8) eine symmetrische Krümmung aufweist.

5. Brennstoffeinspritzventil nach einem der Ansprüche 1 bis 3,
**dadurch gekennzeichnet,**
**daß** die Auflagefläche (20) des schwenkbaren Kippelements (8) eine asymmetrische Krümmung aufweist.

6. Brennstoffeinspritzventil nach einem der Ansprüche 1 bis 5,
**dadurch gekennzeichnet,**
**daß** mehrere schwenkbare Kippelemente (8) vorgesehen sind, die Segmente eines Rings oder Teilrings bilden.

7. Brennstoffeinspritzventil nach einem der Ansprüche 1 bis 6,
**dadurch gekennzeichnet,**
**daß** jedes schwenkbare Kippelement (8) an einem Mitnehmer (12) angreift, welcher an der axial angeordneten Ventilnadel (13) des Brennstoffeinspritzventils (1) angeordnet ist.

8. Brennstoffeinspritzventil nach Anspruch 2,
**dadurch gekennzeichnet,**
**daß** durch die Anordnung des Aktors (5) zwischen dem schwenkbaren Kippelement (8) und einem zweiten Widerlager (14) eine Richtungsumkehr der durch den Aktor (5) auf das schwenkbare Kippelement (8) ausgeübten Kraft erfolgt.

9. Brennstoffeinspritzventil nach einem der Ansprüche 1 bis 8,
**dadurch gekennzeichnet,**
**daß** jedes schwenkbare Kippelement (8) asymmetrische Hebelarme (7, 21) aufweist und der von dem Aktor (5) hervorgerufene Hub übersetzt wird.

10. Brennstoffeinspritzventil nach einem der Ansprüche 1 bis 9,
**dadurch gekennzeichnet,**
**daß** der Aktor (5) ein piezoelektrischer oder magnetostriktiver Aktor ist, welcher aus gestapelt angeordneten, piezoelektrischen oder magnetostriktiven scheibenförmigen Elementen (6) zusammengesetzt ist.

## Claims

1. Fuel injection valve (1), in particular injection valve for fuel injection systems of internal combustion engines, with a valve-closing body (2) which is actuable by an actuator (5) by means of a valve needle (13) and which cooperates with a valve-seat surface (4) to form a sealing seat, and with at least one pivotable tilt element (8) arranged between the actuator (5) and the valve needle (13), the actuator (5) acting on a first lever arm (7) of the pivotable tilt element (8), and a second lever arm (11) of the pivotable tilt element (8) being operatively connected to the valve needle (13), **characterized in that** the actuator (5) is of annular design and in this case surrounds the valve needle (13).

2. Fuel injection valve according to Claim 1, **characterized in that** each pivotable tilt element (8) is supported on a first abutment (10).

3. Fuel injection valve according to Claim 2, **characterized in that** each pivotable tilt element (8) has a curved bearing surface (9) at which it bears against the first abutment (10).

4. Fuel injection valve according to one of Claims 1 to 3, **characterized in that** the bearing surface (9) of the pivotable tilt element (8) has a symmetrical curvature.

5. Fuel injection valve according to one of Claims 1 to 3, **characterized in that** the bearing surface (20) of the pivotable tilt element (8) has an asymmetric curvature.

6. Fuel injection valve according to one of Claims 1 to 5, **characterized in that** a plurality of pivotable tilt elements (8) are provided, which form segments of a ring or part-ring.

7. Fuel injection valve according to one of Claims 1 to 6, **characterized in that** each pivotable tilt element (8) acts on a driver (12) which is arranged on the axially arranged valve needle (13) of the fuel injection valve (1).

8. Fuel injection valve according to Claim 2, **characterized in that**, by the actuator (5) being arranged between the pivotable tilt element (8) and a second abutment (14), a reversal in direction of the force exerted on the pivotable tilt element (8) by the actuator (5) takes place.

9. Fuel injection valve according to one of Claims 1 to 8, **characterized in that** each pivotable tilt element (8) has asymmetric lever arms (7, 21), and the stroke caused by the actuator (5) is stepped up.

10. Fuel injection valve according to one of Claims 1 to 9, **characterized in that** the actuator (5) is a piezoelectric or magnetostrictive actuator which is composed of piezoelectric or magnetostrictive disc-shaped elements (6) arranged in a stacked manner.

## Revendications

1. Injecteur de carburant (1), notamment pour dispositifs d'injection de carburant de moteurs à combustion interne, comprenant un obturateur de soupape (2) pouvant être commandé par un actionneur (5) à l'aide d'une aiguille d'injecteur (13) et coopérant avec une surface de siège de soupape (4) pour servir de siège étanche, et au moins un élément à bascule pivotable (8) disposé entre l'actionneur (5) et l'aiguille (13), l'actionneur (5) s'engageant sur un premier bras de levier (7) de l'élément à bascule (8) pivotable alors qu'un deuxième bras de levier (11) de l'élément à bascule pivotable (8) coopère avec l'aiguille (13),
**caractérisé en ce que**
l'actionneur (5) est annulaire et entoure ainsi l'aiguille (13).

2. Injecteur selon la revendication 1,
**caractérisé en ce que**
chaque élément à bascule pivotable (8) s'appuie sur une première butée (10).

3. Injecteur selon la revendication 2,
**caractérisé en ce que**
chaque élément à bascule pivotable (8) présente une surface portante (9) recourbée qui s'appuie sur la première butée (10).

4. Injecteur selon l'une quelconque des revendications 1 à 3,
**caractérisé en ce que**
la surface portante (9) de l'élément à bascule pivotable (8) présente une courbure symétrique.

5. Injecteur selon l'une quelconque des revendications 1 à 3,
**caractérisé en ce que**
la surface portante (20) de l'élément à bascule pouvant pivoter (8) présente une courbure asymétrique.

6. Injecteur de carburant selon l'une quelconque des revendications 1 à 5,
**caractérisé en ce que**
plusieurs éléments à bascule pivotables (8) forment des segments d'une bague ou d'une bague partielle.

7. Injecteur de carburant selon l'une quelconque des revendications 1 à 6,
**caractérisé en ce que**
chaque élément à bascule pivotable (8) s'engage sur un entraîneur (12) placé sur l'aiguille (13) disposée axialement dans l'injecteur de carburant (1).

8. Injecteur selon la revendication 2,
**caractérisé en ce que**
la disposition de l'actionneur (5) entre l'élément à bascule pivotable (8) et une deuxième butée (14) crée une inversion du sens de direction de la force exercée par l'actionneur (5) sur l'élément à bascule pivotable (8).

9. Injecteur selon l'une quelconque des revendications 1 à 8,
**caractérisé en ce que**
chaque élément à bascule pivotable (8) présente des bras de levier asymétriques (7, 21) et la course engendrée par l'actionneur (5) est amplifiée.

10. Injecteur selon l'une quelconque des revendications 1 à 9,
**caractérisé en ce que**
l'actionneur (5) est un actionneur piézoélectrique ou magnétostrictif qui se compose d'éléments (6) piézoélectriques ou magnétostrictifs en forme de rondelles empilées.
